**Europäisches Patentamt**

**European Patent Office**

**Office européen des brevets**

(19)

(11)  **EP 1 712 963 A2**

(12) **DEMANDE DE BREVET EUROPEEN**

(43) Date de publication:
**18.10.2006 Bulletin 2006/42**

(51) Int Cl.:
***G05B 17/02*** *(2006.01)*

(21) Numéro de dépôt: **06290583.1**

(22) Date de dépôt: **11.04.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **14.04.2005 US 106275**

(71) Demandeur: **Pertinence**
**75002 Paris (FR)**

(72) Inventeurs:
• **Kerisit, Jean-Marc**
  **92400 Courbevoie (FR)**
• **Bousquet, Olivier**
  **92130 Issy-les-Moulineaux (FR)**

(74) Mandataire: **Breese Derambure Majerowicz**
**38, avenue de l'Opéra**
**75002 Paris (FR)**

(54) **Procédé de construction itératif d'un modèle explicatif**

(57) La présente invention concerne un procédé de construction itératif d'un modèle explicatif constitué par au moins une règle calculée à partir d'une pluralité d'expériences, chacune des règles étant associée à au moins un indicateur de qualité de la règle correspondante, caractérisé en ce qu'il comprend les étapes suivantes :
- détermination dans l'espace d'application d'une règle, d'un ensemble d'expériences nouvelles
- réalisation desdites expériences nouvelles pour obtenir les résultats correspondants
- calcul (ou mise à jour le cas échéant) des indicateurs de qualité de la règle choisie en fonction desdites expériences et des résultats correspondants.

Figure 13

EP 1 712 963 A2

**EP 1 712 963 A2**

**Description**

La présente invention concerne le domaine de la construction de modèles explicatifs, en particulier pour des processus industriels nécessitant un grand nombre de réglages parfois interdépendants.

La construction d'un modèle est généralement découpée en deux phases, la première consistant à récolter un certain nombre de données traduisant le fonctionnement du processus, la deuxième consistant à analyser ces données pour en extraire l'information nécessaire à la définition du modèle. La présence d'un grand nombre de réglages rend ces opérations délicates. I1 est d'ailleurs impossible, dans la plupart des cas réels, de caractériser parfaitement le fonctionnement d'un processus complexe. Il est tout aussi impossible d'essayer toutes les configurations possibles des paramètres de réglage de tels processus. De nombreux travaux, dans la littérature scientifique, portent sur la détermination d'un petit nombre de configurations (d'expériences) qui peuvent permettre de caractériser l'ensemble du fonctionnement du processus de façon au moins approximative. L'idée étant qu'une caractérisation même approximative permet déjà de résoudre un certain nombre de problèmes pratiques.

Intuitivement, une méthode efficace consiste à répéter plusieurs fois le cycle de collecte et d'analyse de données. En effet, l'analyse de données est d'autant plus fine qu'il y a d'expériences réalisées dans des conditions diverses, tandis que la réalisation de ces expériences apporte d'autant plus d'informations que l'analyse et le modèle construit sont précis. Pour illustrer ce fait, prenons l'exemple d'un processus industriel dont il faut optimiser la productivité en agissant sur un certain nombre de réglages. Au départ l'expert a une certaine connaissance de ce processus qui lui permet de déterminer pour chacun des réglages la plage potentiellement la plus intéressante. Afin d'optimiser ce réglage il est alors nécessaire d'effectuer des essais. Pour chaque configuration possible de ces réglages on peut mesurer la productivité obtenue. Lorsque que les configurations possibles sont en trop grand nombre et qu'il est trop coûteux de toutes les essayer on peut essayer de déterminer l'influence de chaque réglage individuellement. Cependant cela ne permettra pas de percevoir les phénomènes de couplage qui peuvent exister entre les réglages. Il est donc préférable de faire varier tous les réglages en même temps mais de façon coordonnée. Une fois les expériences correspondantes effectuées, l'expert peut affiner sa compréhension du processus est donc déterminé de nouvelles expériences à effectuer pour tester les hypothèses qu'il a pu formuler. La présente invention a pour but de proposer un système qui aide l'expert dans cette démarche. Pour ce faire il est important que le système en question puisse interagir de façon naturelle et compréhensible avec l'expert. Il est donc proposé d'utiliser les règles explicatives comme support de l'échange entre l'expert et la machine. C'est d'ailleurs un aspect qui distingue la présente invention de l'état de la technique.

En effet, on connaît dans l'état de la technique le brevet américain US6625500 décrivant une méthode consistant à générer et à réaliser automatiquement des expériences de façon itérative, dans le but d'optimiser un processus industriel. Cette méthode impose le choix d'un nombre de niveaux

On connaît également dans l'état de la technique le brevet américain US2002/0128805 décrivant une méthode consistant à mettre au point un modèle de prédiction en générant automatiquement des expériences et en comparant leur résultat avec la prédiction calculée initialement.

Ces deux brevets concernent uniquement des modèles linéaires ou quadratiques à sortie quantitative, et ne s'appliquent donc pas au cas de modèles à base de règles, et notamment à sortie qualitative. De plus ces deux brevets visent à automatiser l'ensemble du processus et ne permettent donc pas l'intégration de la connaissance experte à chaque cycle d'utilisation.

La présente invention vise à remédier à ces inconvénients, en proposant un procédé permettant d'optimiser la construction d'un modèle explicatif avec une économie d'expériences nécessaires à l'obtention de règles pertinentes et facilement interprétables par un expert du processus industriel.

A cet effet, l'invention concerne selon son acception la plus générale un procédé de construction itératif d'un modèle explicatif constitué d'au moins une règle calculée à partir d'une pluralité d'expériences, chacune des règles étant associée à au moins un indicateur de qualité de la règle correspondante, caractérisé en ce qu'il comprend les étapes suivantes :

-   détermination dans l'espace d'application d'une règle, d'un ensemble d'expériences nouvelles

-   réalisation desdites expériences nouvelles pour obtenir les résultats correspondants

-   calcul des indicateurs de qualité de la règle choisie en fonction desdites expériences et des résultats correspondants. De préférence, la (ou les) règle(s) explicative(s) comporte(nt) en outre au moins une prémisse élémentaire consistant en une restriction du domaine d'une variable

    Selon une variante, la (ou les) règle(s) explicative(s) comporte(nt) une combinaison logique de prémisses élémentaires, chaque prémisse élémentaire consistant en une restriction du domaine d'une variable.

    Avantageusement, le procédé comporte une étape supplémentaire de construction d'une modèle explicatif constitué d'au moins une règle à partir des expériences réalisées jusqu'alors.

2

Selon une variante, la construction du modèle explicatif est réalisée par un système automatique qui propose à l'expert un ensemble de règles, ce qui suppose que l'ensemble initial de règles peut être vide (avant l'appel de ce système).

Selon une autre variante, le procédé comporte en outre une étape consistant à modifier les règles suggérées par le système.

Selon un mode de mise en oeuvre particulier, ledit procédé sera appliqué de façon itérative jusqu'à l'obtention d'indicateurs de qualité satisfaisants ou tant qu'au moins un indicateur de qualité s'améliore entre deux cycles.

Selon un mode de mise en oeuvre particulier, lors de l'application itérative du procédé, de nouvelles règles seront construites ou au moins une règle initiale sera mise à jour à partir de l'ensemble (pouvant être vide) des expériences initiales et de l'ensemble des expériences nouvelles.

Selon une variante, la détermination des expériences nouvelles est effectuée manuellement pour une partie ou la totalité des paramètres.

Selon une autre variante, la détermination des expériences nouvelles est effectuée de façon automatique, en prenant en compte, selon des variantes particulières, l'un au moins des critères suivants

- Effet prévisible des expériences nouvelles sur la règle choisie (mesuré par les indicateurs de qualités dont une liste non exhaustive est donnée dans la description d'un exemple de mise en oeuvre)

- Le nombre d'expériences nouvelles

- Le coût (individuel ou cumulé) des expériences nouvelles

- La faisabilité (individuelle) des expériences nouvelles

- Les distances deux à deux entre les expériences initiales et nouvelles et les distances deux à deux entre les expériences nouvelles, dans l'espace d'application de la règle

Selon un mode de mise en oeuvre particulier, ledit procédé comporte une étape additionnelle de représentation graphique des règles et des indicateurs de qualité correspondant.

Selon un mode de réalisation particulier, il comporte en outre une étape de visualisation graphique des expériences nouvelles suggérées.

L'invention sera mieux comprise à la lecture de la description qui suit, se référant à des exemples non limitatifs de réalisation où :

Le procédé de construction d'un modèle explicatif selon un exemple de mise en oeuvre de l'invention se décompose en différentes étapes :

- la construction d'un modèle initial à partir d'un nombre réduit d'expériences disponibles

- l'amélioration de ce modèle par un processus itératif, visant à identifier des expériences nouvelles susceptibles d'avoir un effet favorable sur l'amélioration de la pertinence de la règle ou de l'ensemble des règles.

**Etape de construction d'un modèle initial.**

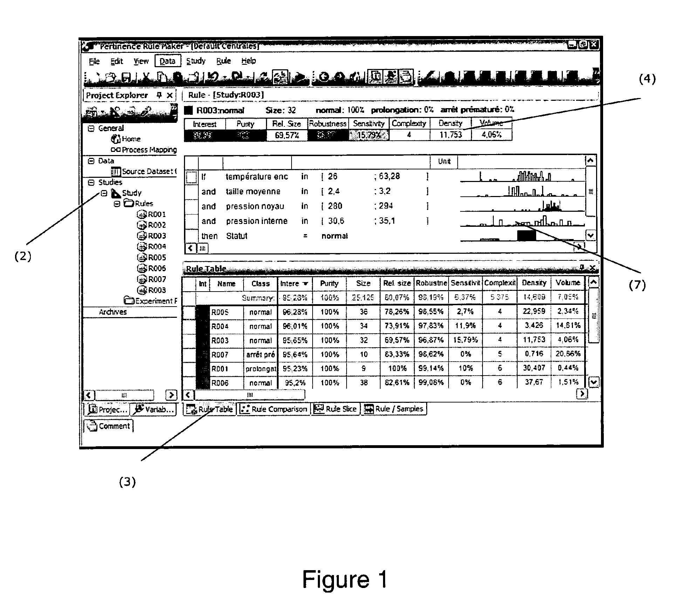

La construction du modèle initial est réalisée par un système articulé autour de l'architecture logicielle dont un exemple est représenté en figure 1.

Ce système est composé de:

- un module d'accès aux données (1)
- un module de gestion de projets (2)
- un module de gestion de règles (3)
- un module de calcul des valeurs d'indicateurs de qualité d'une règle (4)
- un module de génération d'un jeu de règles (5)
- un module d'édition de règles (6)
- un module d'optimisation de règles (7)
- un module de comparaison des règles (8)
- un module de visualisation d'une règle (9)

Une représentation graphique d'une partie de ces modules est donnée à la figure 1.

### Module d'accès aux données (1)

Ce module d'accès aux données (1) est destiné à la lecture et à l'enregistrement des données sous forme de fichier informatique de format adapté. Ces données sont les informations correspondant aux expériences (aussi appelés exemples ou points) à partir desquels vont être créées et validées les règles. Chaque ligne renseigne les valeurs des variables (aussi appelées colonnes). Ces variables peuvent être de nature ordonnée (par exemple, prenant des valeurs numériques) ou non ordonnées (par exemple, prenant des valeurs discrètes textuelles).

Ces informations sont par exemple constituées par une table externe comprenant pour chaque exemple des valeurs de variables expérimentales ainsi qu'une variable de sortie dont on cherche à construire le modèle explicatif. Cette variable de sortie est, dans l'exemple décrit à titre non limitatif, une variable non ordonnée. Dans le cas d'une application portant sur l'analyse de réglage d'une chaîne de production, cette table comportera, pour une série de tests, les valeurs des réglages de chaque équipement de la chaîne ainsi que la valeur d'indicateurs de performance ou de mesure collectés sur la chaîne de production.

Son interface à l'utilisateur propose le choix entre ces options et pour chacune d'entre elle demande la saisie des paramètres correspondants (par exemple : nom et chemin d'accès du fichier, etc...). Ce module d'accès aux données (1) réalise l'importation de données selon des formats disparates, pour les enregistrer en mémoire.

### Module de gestion de projets (2)

Ce module de gestion de projets (2) accède aux données historiques par l'intermédiaire du module d'accès aux données (1), ainsi qu'aux règles par l'intermédiaire du module de gestion de règles (3), pour enregistrer les projets de travail sous forme de fichiers présentant un format spécifique.

### Module de gestion de règles (3)

Ce module de gestion de règles (3) met à disposition des autres modules l'ensemble des règles disponibles, provenant du module d'édition de règles (7), ou du module de génération de règles (5) et maintient la cohérence des règles modifiées par les modules d'optimisation (6), d'édition de règles (7) et de visualisation d'une règle (9). Il maintient pour chacune des règles la cohérence des indicateurs de qualité en appelant le module de calcul des valeurs d'indicateurs de qualité (4).

Ce module met également à disposition du module de comparaison des règles (8) l'ensemble de ces règles.

Dans l'exemple d'implémentation, une règle se définit précisément par :

- une conjonction de prémisses élémentaires, chaque prémisse élémentaire consistant en une restriction du domaine d'une variable :

  o sous forme d'un intervalle de variation pour une variable ordonnée
  o sous forme d'une valeur particulière pour une variable non ordonnée

- et une conclusion élémentaire consistant également en une restriction du domaine d'une variable, ladite variable devant être discrète (non ordonnée).
  Le module de gestion de règles réalise l'enregistrement de ces règles sous forme d'un fichier présentant un format spécifique.

### Module de calcul des valeurs d'indicateurs de qualité d'une règle (4)

Ce module permet de calculer à partir d'une règle telle que produite par le module (3) et d'un jeu de données tel que produit par le module (1) un ensemble de valeurs d'indicateurs de qualité pour cette règle.

Certains critères de qualité des règles se définissent par rapport à une représentation géométrique des règles qui nécessitent quelques explications préliminaires. On dit d'un exemple qu'il est « couvert » par une règle s'il satisfait toutes les prémisses de la règle (en particulier, une règle sans prémisse couvre tous les exemples). On dit d'un exemple qu'il est « bien classé » par une règle s'il satisfait toutes les conclusions de la règle et qu'il est « mal classé » sinon. On appelle « classe » d'une règle, l'ensemble des exemples « bien classés » par la règle.

Dans la suite, étant données une base d'exemples et une règle, on note

N, le nombre d'exemples de la base qui sont dans la classe de la règle,

n, le nombre d'exemples couverts par la règle et bien classés,

k, le nombre d'exemples couverts par la règle et mal classés,

K, le nombre d'exemples de la base qui ne sont pas dans la classe de la règle.

Les indicateurs calculés peuvent en particulier être pris parmi les indicateurs suivants :

**• Taille**

L'indicateur de taille est le nombre d'exemples de la base couverts par la règle :

$$I_{Size} = n + k$$

**• Taille relative**

La taille relative est un indicateur qui prend en compte la conclusion de la règle. Elle se calcule ainsi : nombre d'exemples qui satisfont les prémisses et les conclusions de la règle / nombre d'exemples qui satisfont les conclusions de la règle :

$$I_{\mathrm{Re}lativeSize} = \frac{n}{N}$$

**• Pureté**

Le degré de pureté d'une règle est déterminé par le rapport du nombre d'exemples couverts par la règle et bien classés sur le nombre total d'exemples couverts par la règle.
Par exemple, si une règle concluant sur la valeur « bon » pour la variable de sortie, contient 5 points (exemples) dont 4 ont pour valeur de la variable de sortie la valeur « bon » et 1 point la valeur « mauvais », la pureté de la règle est de 4/5, soit 80%.

$$I_{Purity} = \frac{n}{n + k}$$

**• Complexité**

C'est le nombre de variables impliquées dans des prémisses de la règle.

**• Nombre de variables contrôlées**

Cet indicateur se définit comme le nombre de variables contrôlées impliquées dans des prémisses de la règle.

**• Nombre de variables non contrôlées**

Cet indicateur se définit comme le nombre de variables non contrôlées impliquées dans des prémisses de la règle.

**• Robustesse**

La robustesse d'une règle est un indicateur statistique prenant en compte la probabilité selon laquelle cette règle pourrait être le résultat du pur hasard. Pour la calculer, on utilise le nombre suivant qui détermine la probabilité (sous la loi hypergéométrique) d'obtenir une règle qui ait la même taille relative (en supposant toutes les combinaisons équiprobables) parmi celles qui ont même taille :

$$hg(R) = \frac{C_N^n \times C_K^k}{C_{N+K}^{n+k}}$$

On effectue alors un tirage aléatoire de règles (en tirant des paires de points et en calculant la règle la moins générale qui couvre ces points) que l'on classe par probabilité hypergéométrique hg(R) décroissante.

Parmi celles-ci, on détermine une règle telle que 10% des règles aient une probabilité plus faible, on l'appelle T.

On calcule ensuite la fonction suivante qui vaut ½ lorsque la règle R a la même probabilité hypergéométrique que la règle T :

$$F(R) = 1 - \frac{1}{2^{\log(hg(R))/\log(hg(T))}}$$

Cette fonction, est, à peu de chose près, l'indicateur de robustesse. Il suffit de corriger sa valeur lorsque la pureté de la règle R est inférieure à celle de la base (calculée comme le rapport N/(N+K)) :

$$I_{robustness}(R) = \begin{cases} F(R), & si\ I_{purity}(R) > \dfrac{N}{N+K} \\ 2 \times F(R_0) - F(R) & sinon \end{cases}$$

où $R_0$ est une règle (arbitraire) de même taille que $R$ et de pureté $\dfrac{N}{N+K}$ .

• **Volume relatif**

Le volume relatif de la règle se calcul comme le produit des « volumes » relatifs des domaines de chaque prémisse. On entend par volume relatif d'une prémisse, le rapport de la mesure de l'espace de variation de la variable impliquée après restriction à la mesure de l'espace total de variation de cette variable.

Ainsi, si une variable V1 peut prendre des valeurs réelles quelconques entre 0 et 3 dans toute la base, le volume relatif d'une prémisse de type « V1 entre 1 et 2 » est de 1/3, car le volume de l'intervalle de restriction est 1 (= 2 - 1), et le volume de l'intervalle total de variation est de 3 (= 3 - 0). De même, si une variable V2 peut prendre 2 valeurs dans toute la base :{Bon, Mauvais}, le volume relatif d'une prémisse de type « V2 = Bon» est de 1/2, car le volume de l'intervalle de restriction est 1 (une seule valeur), et le volume de l'intervalle total de variation est de 2 (2 valeurs possibles). Dans ces hypothèses, le volume relatif d'une règle de type « Si V1 entre 1 et 2 et V2 = Bon, Alors ...» vaut : 1/3 . 1/2 = 1/6.

• **Densité**

La densité d'une règle se calcule comme le rapport de sa taille normalisée (taille / nombre d'exemples dans la base) sur son volume relatif. Dans le cas particulier où le volume est nul, la densité vaut 1.

$$I_{Density} = \frac{I_{size}}{(N+K) \cdot I_{RelativeVolume}}$$

• **Sensibilité**

La sensibilité est déterminée par la méthode suivante.

- La sensibilité d'une prémisse est obtenue en mesurant la différence de pureté, après perturbation, c'est-à-dire, augmentation des bornes de la variable de 10% (5% à gauche et 5% à droite)

- La sensibilité d'une règle est obtenue en prenant le maximum des sensibilités des prémisses qu'elle contient.

**• Intérêt**

L'intérêt est un indicateur composite qui se calcule comme un produit de combinaisons linéaires d'indicateurs parmi les indicateurs précédents, dont la forme exacte (c'est-à-dire les poids affectés à chaque indicateur individuel) est déterminée par des choix effectués par l'utilisateur lors de la définition des objectifs de l'étude.

**• Autres indicateurs**

Toute combinaison des indicateurs précédents peut constituer un nouvel indicateur.

**Module de génération automatique d'un modèle explicatif (5)**

Le module de génération d'un modèle explicatif (5) exploite la totalité ou une partie seulement des données (issue du module (1)). La finalité de ce module est de fabriquer des règles qui concluent sur une variable de sortie pour laquelle on cherche à construire un modèle explicatif, et qui soient d'une qualité suffisante par rapport à des critères énoncés par l'utilisateur mettant en jeu les différents indicateurs définis ci-dessus. Par exemple, l'algorithme d'apprentissage est utilisé pour définir des règles d'une taille et d'un volume suffisants, d'une bonne densité, d'une bonne robustesse et/ou d'une bonne sensibilité.
On dit qu'une règle généralise un ensemble de points si elle couvre ces points (ses conditions sont validées par ces points). Etant donné un ensemble de points, la moindre généralisée est la plus petite règle (au sens de l'inclusion) qui généralise cet ensemble.
Dans l'implémentation proposée du module de génération de règles, on applique un procédé itératif constitué des étapes suivantes :

- Choix d'un ensemble de points . Un ensemble de points est déterminé par tirage aléatoire parmi les points non encore couverts par des règles et dont la compatibilité est la plus forte.
- Construction de la moindre généralisée : La règle moindre généralisée de l'ensemble de points est construite et évaluée (ses indicateurs de qualité sont calculés)
- Elargissement de la règle : La règle est modifiée par élargissement tant que ses indicateurs de qualité peuvent être améliorés
- Mise à jour des indicateurs de couverture et compatibilité : Les indicateurs de couverture et de compatibilité (possibilité de créer une bonne règle à partir de ces points) sont mis à jour.

Enfin, une étape optionnelle consiste à combiner les règles obtenues afin d'en réduire le nombre, en réalisant des intersections entre règles couvrant les mêmes points et en supprimant les règles redondantes.

**Module d'édition de règles (6)**

Ce module (6) constitue une interface graphique utilisateur permettant à l'utilisateur de manipuler les règles et d'apporter des modifications. L'utilisateur peut sélectionner une règle et modifier le domaine de variation des variables. Le module (6) recalcule en temps réel les indicateurs de qualité de la règle et affiche le résultat des nouveaux indicateurs de qualité résultant des modifications imposés par l'utilisateur. Les modifications déterminées par l'utilisateur se traduisent également par une variation de représentation graphique des indicateurs de qualité, sous la forme de variation de la couleur par exemple.

**Module d'optimisation de règles (7)**

Ce module optionnel permet d'optimiser une règle selon un certain nombre de critères de qualité. Sa mise en oeuvre est constituée, dans l'implémentation proposée, de trois étapes distinctes :

*Sous-étape de spécification de l'objectif de l'optimisation*

Ce module permet de spécifier des contraintes (invariance de prémisses, valeurs minimales ou maximales pour les indicateurs) et des objectifs (maximisation, minimisation ou ignorance) sur chacun des indicateurs cités précédemment.

L'utilisateur pourra imposer des contraintes sur tout ou partie des indicateurs ou sélectionner tout ou partie des indicateurs à optimiser :

Par exemple, il imposera une valeur seuil à un indicateur, ou désignera un indicateur à maximiser ou à minimiser.
La valeur de seuil correspond dans l'exemple décrit à la valeur courante de l'indicateur, pour la règle initiale. L'utilisateur pourra choisir de fixer cette valeur en tant que seuil supérieur ou seuil inférieur.
Il pourra aussi ignorer certains indicateurs, sur lesquels aucune contrainte ne s'appliquera dans la suite des traitements.

*Sous-étape de calcul des règles optimisées*

Ce module effectue une recherche par algorithme génétique multi-objectif avec contraintes d'un ensemble de règles optimales pour les critères spécifiés par l'utilisateur, similaires à la règle initialement choisie et respectant les contraintes spécifiées.

L'implémentation proposée est itérative et consiste en la répétition d'un corps algorithmique qui consiste à, étant donné un ensemble de règles candidates, effectuer des opérations élémentaires de modification sur ces règles, évaluer leur qualité en regard des différents critères et contraintes, et sélectionner les plus satisfaisantes.

Une des particularités de l'implémentation proposée est le maintien de deux populations (ou ensembles de règles). L'un permettant les traitements et la recherche aléatoire, l'autre servant à mémoriser les meilleures règles (population *élite*) pour éviter qu'au cours de la progression de l'algorithme, les règles intéressantes précédemment trouvées ne soient perdues.

La gestion des contraintes se fait de façon dynamique, en les relâchant au début de l'algorithme et en augmentant progressivement leur effet restrictif.

*Sous-étape de visualisation des règles suggérées*

Ce module permet de présenter sous forme graphique les règles choisies par l'algorithme.

Ces règles sont représentées sous une forme graphique sur un diagramme dont les axes correspondent à deux indicateurs de qualité, choisis par l'utilisateur. Chaque règle est représentée par un signe graphique dont les coordonnées correspondent aux valeurs des deux indicateurs. Cette représentation permet à l'utilisateur de sélectionner l'une des règles optimisées ou plusieurs d'entre elles, correspondant à un compromis optimal par rapport aux indicateurs de qualité.

Pour chacune des règles représentées, l'utilisateur accède aux valeurs des indicateurs de qualité correspondant sous forme d'un tableau.

Ce tableau comprend également la matrice de contribution où chaque cellule correspond à la restriction de domaine d'une variable, pour une règle donnée.

**Module de comparaison des règles (8)**

Ce module permet de positionner les règles en fonction de la valeur de deux indicateurs de qualité choisis parmi l'ensemble des indicateurs de qualité. Chaque règle peut être positionnée sur un graphe dont les axes correspondent aux indicateurs de qualité choisis.

**Module de visualisation d'une règle (9)**

Ce module permet d'afficher et de manipuler une représentation graphique d'une règle. La règle est représentée sous forme d'une projection de l'hypercube de points sur deux variables choisies par l'utilisateur. Les contours de l'hypercube peuvent être modifiés, et dans ce cas la règle est réévaluée dynamiquement. Les indicateurs de qualité sont également recalculés en temps réel.

**<u>Etape d'amélioration du modèle construit à partir des expériences initiales.</u>**

A partir du modèle ainsi construit et le cas échéant à partir de la règle optimisée, l'invention comporte un processus itératif additionnel consistant à déterminer un ensemble optimal d'expériences supplémentaires, afin d'améliorer le modèle et la pertinence des règles.

Une implémentation possible de ce processus itératif consiste en la mise en oeuvre successive des modules suivants :

- Module de spécification du domaine expérimental (10)
- Module de détermination automatique des expériences à réaliser (11)
- Module de visualisation des expériences à réaliser (12)
- Module de saisie des résultats d'expériences (13)
- Module de mise à jour du modèle explicatif (14)

**Module de spécification du domaine expérimental (10)**

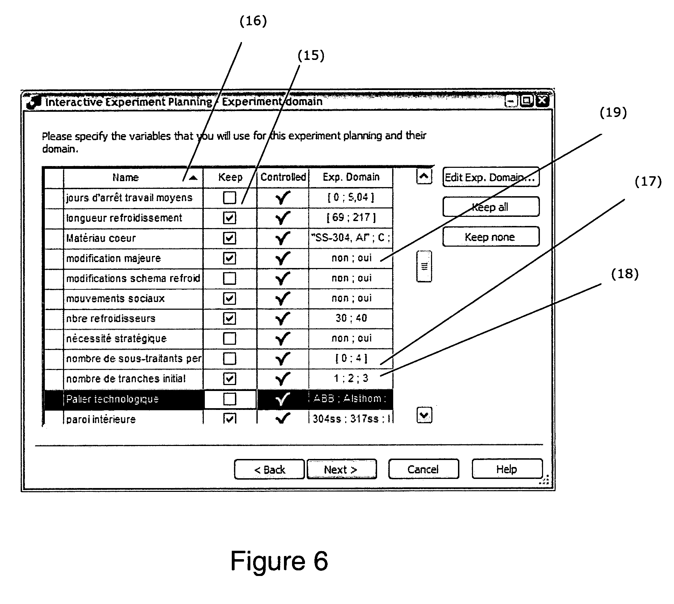

Ce module consiste en un assistant graphique, dont un exemple de réalisation est donné (fig. 6), qui permet à l'utilisateur de spécifier les variables qui sont amenées à varier dans les expériences (sélection dans les cases à cocher (15), et le domaine de variation possible de chacune de ces variables (16), qui peut être déterminé par un intervalle (17) ou une liste de valeurs numériques (18) ou textuelles (19).

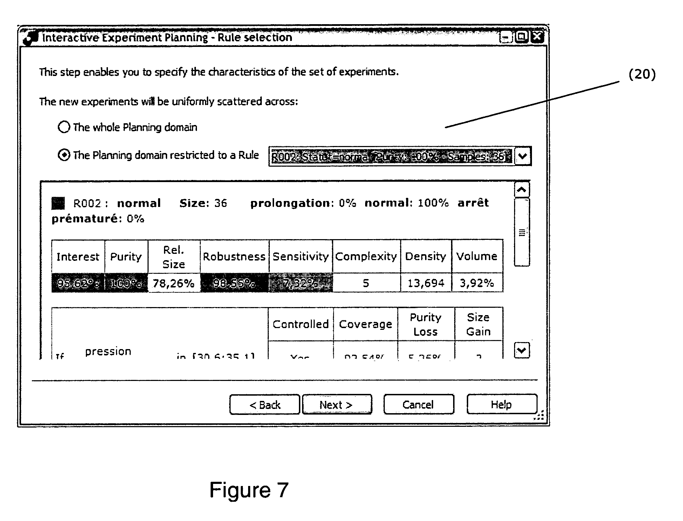

Une étape optionnelle (représentée figure 7) permet de définir automatiquement une restriction du domaine expérimental en choisissant une règle (20) parmi l'ensemble des règles constituant le modèle explicatif.

**Module de détermination automatique des expériences à réaliser (11)**

Un élément important de la présente invention est constitué par l'algorithme de détermination automatique des expériences à réaliser. L'ensemble des réglages possibles du processus peut être représenté par un espace où chaque dimension correspond à un réglage. Dans cet espace un hypercube caractérise l'ensemble des configurations acceptables. Il est possible qu'un certain nombre d'expériences ait été déjà réalisé. Ces expériences sont représentées par des poins dans cet hypercube. Les nouvelles expériences à réaliser vont aussi être représentées par des points. Le but est alors de retrouver une répartition de ces dernières qui permettent une bonne exploration, c'est-à-dire aussi exhaustive que possible, de l'hypercube des configurations possibles.

Plus précisément, on considère un hypercube A (domaine d'étude) et un ensemble H de h points de A (échantillons historiques).

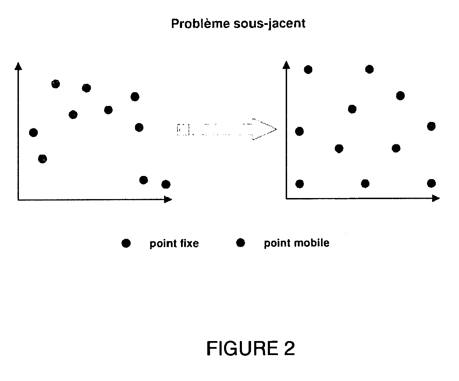

Il s'agit de trouver un ensemble P de n points de A (futures expériences) tels que les (n+h) points soient répartis le plus uniformément possible (voir illustration figure 2).

Une fois le problème ainsi posé il faut choisir, d'une part un critère permettant de mesurer l'uniformité de la répartition des points, et d'autre part une méthode efficace d'optimisation de ce critère.

Dans une implémentation de la présente invention, un critère basé sur les distances entre points est utilisé.

A ce critère s'ajoute un certain nombre de contraintes ayant pour but que de garantir l'uniformité de la répartition des points en projection sur chacune des dimensions.

Enfin l'implémentation proposée repose sur un algorithme de recherche d'une solution par optimisation locale.

*Critère de dispersion*

Le critère de dispersion utilisé est :

$$U(P) = \left( \sum_{x \in P, y \in P \cup H, x \neq y} \left\| x - y \right\|_q^{-p} \right)^{-1}$$

avec

$$\left\| x - y \right\|_q = \left( \sum_{j \text{ ordonnée}} \left| x_j - y_j \right|^q + \sum_{j \text{ non ordonnée}} 1_{x_j = y_j} \right)^{1/q}$$

Le problème revient donc à trouver un plan de dispersion maximale.

*Contraintes*

Quitte à appliquer la transformation affine adéquate, on peut supposer que la plage de variation de toutes les variables contrôlées est [0 ; 1]. Dans ces conditions, les contraintes suivantes sont imposées :

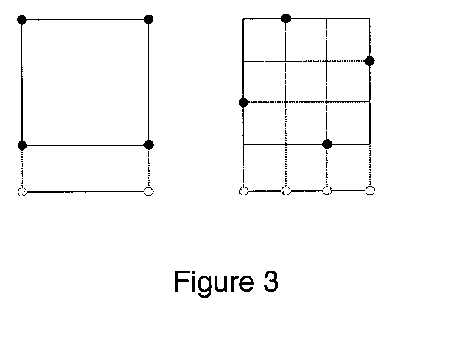

- Variable continue ordonnée : les valeurs possibles sont choisies uniquement dans {0, 1/(n+k-1), ..., (n+k-2)/(n+k-1), 1 } (avec k, entier positif). Une valeur ne peut pas être prise deux fois. Pour k = 0, il s'agit de la contrainte des plans hypercubes latins.
- Variable non ordonnée : le nombre d'occurrences de chaque modalité dans les échantillons historiques et les futures expériences est supérieur à la partie entière de (n+h)/N (où N est le nombre de modalités).
  Considérons l'exemple de la figure 3 en dimension 2 (n = 4, k = 0, h = 0).
- Plan standard (fig. 3 gauche) : très bonne répartition globale, projection sur une dimension mauvaise
- Plan hypercube latin (fig. 3 droite) : bonne répartition globale, projection sur une dimension satisfaisante

La contrainte diminue la dispersion globale mais permet d'éviter l'écueil d'une mauvaise répartition sur certaines dimensions. Elle permet également de se ramener à un problème d'optimisation discrète.
Dans la plupart des cas, on pourra prendre k=0. Cependant k devra par exemple être strictement positif dans le cas suivant : une seule variable continue ordonnée, aucune variable non ordonnée et H $\cap$ {0, 1/(n-1), ..., (n-2)/(n-1), 1} $\neq \varnothing$. Dans cette situation, si k = 0, la dispersion est nulle.
Ceci suggère d'utiliser $(n+k)^{dim} \geq n + h$ (avec dim, nombre de variables du domaine expérimental).

*Algorithme*

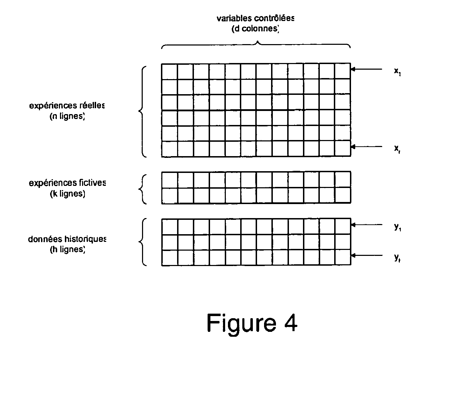

Un plan d'expériences est représenté par la matrice d'expériences, une matrice à n lignes et d colonnes (d est le nombre de variables contrôlées) voir figure 4.
Une matrice de données fictives permet de manipuler facilement la contrainte sur les variables continues : les valeurs prises au cours des expériences (réelles ou fictives) sont exactement {0, 1/(n+k-1), ..., (n+k-2)/(n+k-1), 1}.
L'algorithme proposé suit le principe suivant :

- Partir d'une configuration initiale convenable
- Tant que la dispersion croît

    o Pour une séquence de transformations

        ■ Tester la transformation
        ■ Opérer la transformation si la dispersion croît

Ce principe implique notamment :

- La dispersion est toujours croissante pendant le déroulement de l'algorithme
- la solution trouvée à la fin de l'algorithme est un minimum local.
- Pour obtenir de meilleures solutions, l'algorithme peut être lancé à partir de plusieurs configurations initiales différentes.

Une configuration initiale convenable est une configuration quelconque vérifiant les contraintes.
Les transformations possibles sont :

- Colonnes d'une variable continue : échange d'une case "expérience réelle" et d'une case "expérience".

- Colonnes d'une variable discrète : échange d'une case "expérience réelle" et d'une case "expérience réelle".

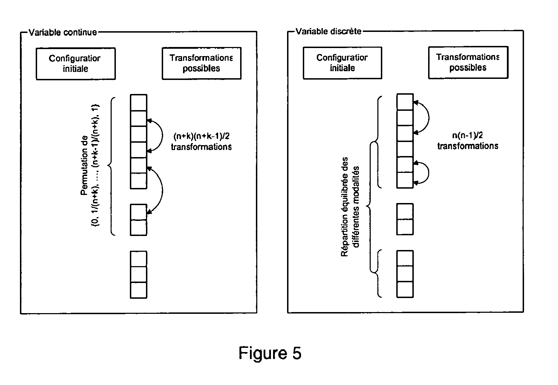

Le diagramme figure 5 résume les comportements des colonnes pour les variables continues et les variables discrètes.
Dans l'implémentation proposée, les paramètres suivants sont utilisés :

- paramètres de la fonction de dispersion : p (=8), q (=2, distance euclidienne)
- valeur de k (=0 ou max($(n+h)^{1/dim}$-n , 0))
- séquence de transformations (tous les échanges possibles de deux cases pour toutes les colonnes dans un ordre aléatoire).

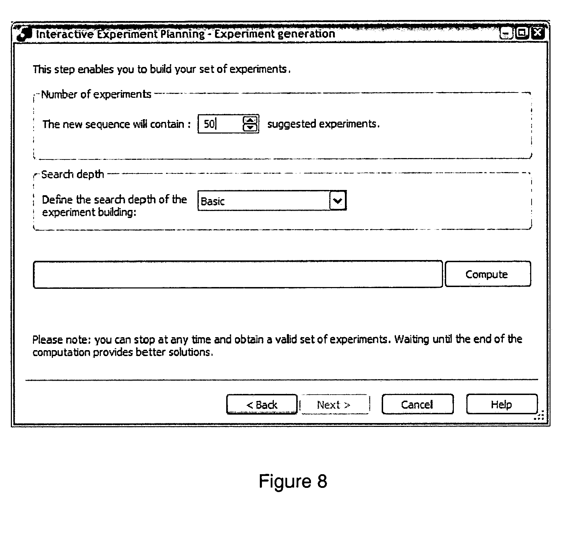

La spécification des paramètres additionnels par l'utilisateur (nombre d'expériences à réaliser et profondeur de recherche) peut être effectuée au moyen de l'interface graphique représentée en figure 8.

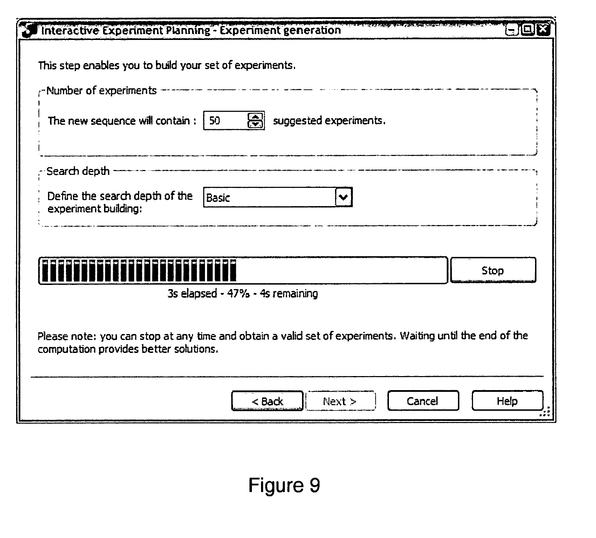

Lors du fonctionnement de l'algorithme ci-dessus, une visualisation de la progression (comprenant une estimation du temps de calcul restant) est donnée en figure 9.

**Module de visualisation des expériences à réaliser (12)**

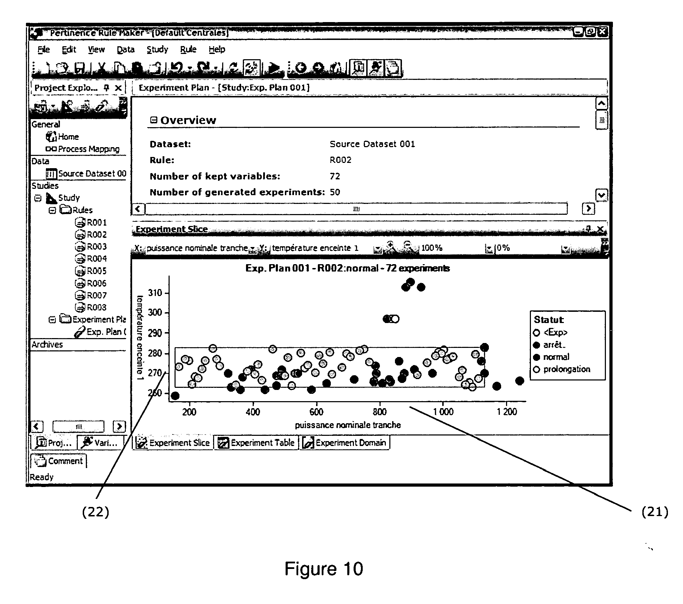

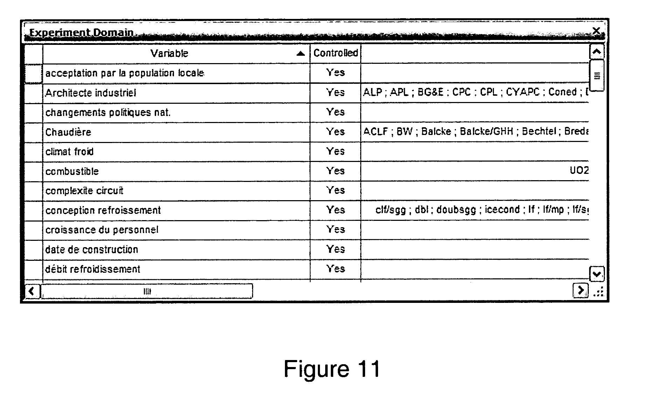

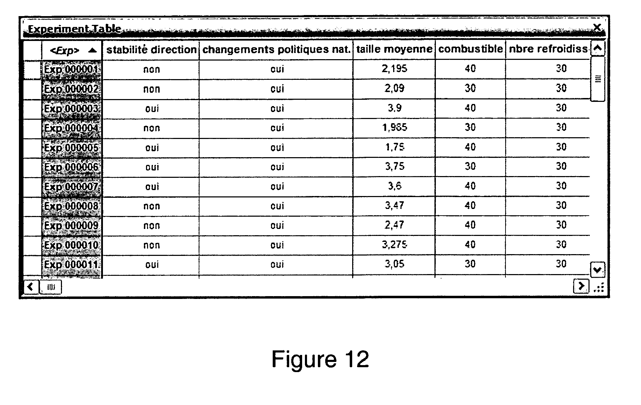

Les expériences générées peuvent être visualisées de plusieurs façons. Une représentation sous la forme d'une table peut être donnée (fig. 12) ou, plus avantageusement, une représentation graphique similaire à celle du module de visualisation de règles (9) est possible, ainsi qu'illustré figure 10. Dans cette représentation, sont visualisées, selon deux axes (21-22) choisis par l'utilisateur, l'ensemble des expériences historiques et nouvellement suggérées. Un code de couleur est utilisé pour distinguer les expériences: celles ayant été réalisées sont repérées par la couleur correspondant à leur valeur de sortie, tandis que les expériences nouvellement suggérées sont repérées par une couleur unique distincte.

**Module de saisie des résultats d'expériences (13)**

Ce module s'appuie sur le module d'accès aux données (1). Une fois les expériences mise en oeuvre sur le processus industriel par exemple, les valeurs de la variable de sortie associées sont collectées et entrées dans un système informatique adapté. Le module (1) peut donc y accéder et importer ces résultats dans le système pour que chacune des expériences réalisées s'ajoute à la liste des expériences historiques.

**Module de mise à jour du modèle explicatif (14)**

Lors de la collecte des résultats des expériences nouvelles réalisées, les indicateurs des règles du modèle explicatif sont mis à jour automatiquement.

A partir de ces nouveaux indicateurs l'utilisateur peut décider de mettre à jour le modèle explicatif.

Une implémentation de cette mise à jour consiste en l'utilisation d'un ou plusieurs des modules (3) à (9).

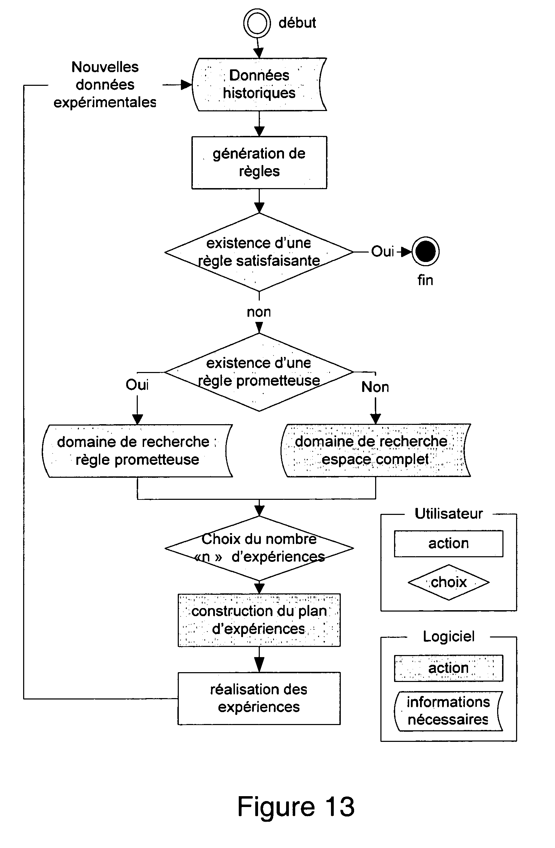

Une fois le modèle explicatif mis à jour de façon satisfaisante (au vu des indicateurs correspondants), la présente étape (modules (10) à (14)) peut être répétée). Ce fonctionnement est illustré figure 13.

**Revendications**

1. Procédé de construction itératif d'un modèle explicatif constitué par au moins une règle calculée à partir d'une pluralité d'expériences, chacune des règles étant associée à au moins un indicateur de qualité de la règle correspondante, **caractérisé en ce qu'**il comprend les étapes suivantes :

   - détermination dans l'espace d'application d'une règle, d'un ensemble d'expériences nouvelles
   - réalisation desdites expériences nouvelles pour obtenir les résultats correspondants
   - calcul (ou mise à jour le cas échéant) des indicateurs de qualité de la règle choisie en fonction desdites expériences et des résultats correspondants.

2. Procédé de construction itératif d'un modèle explicatif selon la revendication 1 **caractérisé en ce qu'**il comporte une étape supplémentaire de redéfinition de nouvelles règles à partir des expériences initiales et des expériences nouvelles lorsque les indicateurs de qualité ne sont pas satisfaisants.

3. Procédé de construction itératif d'un modèle explicatif selon la revendication 1 **caractérisé en ce qu'**il comporte une étape supplémentaire de modification d'au moins une règle initiale à partir des expériences initiales et des expériences nouvelles lorsque les indicateurs de qualité ne sont pas satisfaisants.

4. Procédé de construction itératif d'un modèle explicatif selon l'une au moins des revendications précédentes **caractérisé en ce que** l'ensemble initial de règles est vide.

5. Procédé de construction itératif d'un modèle explicatif selon l'une quelconque des revendications 1 à 4 **caractérisé en ce que** les étapes de détermination et de réalisation de nouvelles expériences est répété jusqu'à l'obtention d'indicateurs de qualité satisfaisants.

**6.** Procédé de construction itératif d'un modèle explicatif selon l'une quelconque des revendications 1 à 4 **caractérisé en ce que** les étapes de détermination et de réalisation de nouvelles expériences sont répétées tant qu'au moins un indicateur de qualité s'améliorent entre deux cycles.

**7.** Procédé de construction itératif d'un modèle explicatif selon l'une au moins des revendications précédentes **caractérisé en ce que** l'étape de détermination des expériences nouvelles est réalisé pour certaines expériences et pour certains des paramètres au moins de ces expériences manuellement.

**8.** Procédé de construction itératif d'un modèle explicatif selon l'une au moins des revendications précédentes **caractérisé en ce que** l'étape de détermination des expériences nouvelles s'effectue pour certaines expériences au moins et pour certains des paramètres au moins par maximisation de l'effet prévisible des expériences nouvelles sur ladite règle.

**9.** Procédé de construction itératif d'un modèle explicatif selon l'une au moins des revendications précédentes **caractérisé en ce que** l'étape de détermination des expériences nouvelles est effectuée en prenant en compte le paramètre représentatif du coût de l'expérience nouvelle.

**10.** Procédé de construction itératif d'un modèle explicatif selon l'une au moins des revendications précédentes **caractérisé en ce que** l'étape de détermination des expériences nouvelles est effectuée en prenant en compte le paramètre représentatif de la faisabilité de l'expérience nouvelle.

**11.** Procédé de construction itératif d'un modèle explicatif selon l'une au moins des revendications précédentes **caractérisé en ce que** l'étape de détermination des expériences nouvelles s'effectue pour certaines expériences au moins par maximisation du compromis entre l'effet prévisible des expériences nouvelles sur ladite règle et le nombre d'expériences nouvelles.

**12.** Procédé de construction itératif d'un modèle explicatif selon l'une au moins des revendications précédentes **caractérisé en ce que** l'étape de détermination des expériences nouvelles s'effectue pour certaines expériences au moins par maximisation du compromis entre l'effet prévisible des expériences nouvelles sur ladite règle et le coût cumulé des expériences nouvelles.

**13.** Procédé de construction itératif d'un modèle explicatif selon l'une au moins des revendications précédentes **caractérisé en ce que** l'étape de détermination des expériences nouvelles s'effectue pour certaines expériences au moins par maximisation des distances deux à deux entre les expériences initiales et nouvelles, dans l'espace d'application de la règle.

Figure 1

Problème sous-jacent

● point fixe ● point mobile

FIGURE 2

Figure 3

variables contrôlées
(d colonnes)

expériences réelles
(n lignes)

$x_1$

$x_r$

expériences fictives
(k lignes)

données historiques
(h lignes)

$y_1$

$y_r$

Figure 4

Figure 5

(16)

(15)

(19)

(17)

(18)

| Name | Keep | Controlled | Exp. Domain |
|---|---|---|---|
| jours d'arrêt travail moyens | ☐ | ✓ | [ 0 ; 5,04 ] |
| longueur refroidissement | ☑ | ✓ | [ 69 ; 217 ] |
| Matériau coeur | ☑ | ✓ | "SS-304, Ar" ; C ; |
| modification majeure | ☑ | ✓ | non ; oui |
| modifications schema refroid | ☐ | ✓ | non ; oui |
| mouvements sociaux | ☑ | ✓ | non ; oui |
| nbre refroidisseurs | ☑ | ✓ | 30 ; 40 |
| nécessité stratégique | ☐ | ✓ | non ; oui |
| nombre de sous-traitants per | ☐ | ✓ | [ 0 ; 4 ] |
| nombre de tranches initial | ☑ | ✓ | 1 ; 2 ; 3 |
| Palier technologique | ☐ | ✓ | ABB ; Alsthom ; |
| paroi intérieure | ☑ | ✓ | 304ss ; 317ss ; I |

Please specify the variables that you will use for this experiment planning and their domain.

Interactive Experiment Planning / Experiment domain

Edit Exp. Domain...

Keep all

Keep none

< Back  Next >  Cancel  Help

# Figure 6

**Interactive Experiment Planning - Rule selection**

This step enables you to specify the characteristics of the set of experiments.

The new experiments will be uniformly scattered across:

○ The whole Planning domain

⊙ The Planning domain restricted to a Rule  [R002 State=normal Purity=100% Samples:36] ▼

(20)

■ R002 : **normal**   Size: 36   **prolongation**: 0%  **normal**: 100%  **arrêt prématuré**: 0%

| Interest | Purity | Rel. Size | Robustness | Sensitivity | Complexity | Density | Volume |
|----------|--------|-----------|------------|-------------|------------|---------|--------|
| 95,62% | 100% | 78,26% | 98,55% | 7,32% | 5 | 13,694 | 3,92% |

| | | | Controlled | Coverage | Purity Loss | Size Gain | |
|---|---|---|------------|----------|-------------|-----------|---|
| Tf pression | in [30,6;35,1] | Yes | 93,54% | 5,26% | 3 | | |

[ < Back ]  [ Next > ]  [ Cancel ]  [ Help ]

# Figure 7

Interactive Experiment Planning - Experiment generation

This step enables you to build your set of experiments.

┌─ Number of experiments ────────────────────────────────────────────────────┐
│                                                                             │
│   The new sequence will contain :  [ 50|  ]  [⇕]  suggested experiments.     │
│                                                                             │
└─────────────────────────────────────────────────────────────────────────────┘

┌─ Search depth ──────────────────────────────────────────────────────────────┐
│                                                                             │
│   Define the search depth of the   [ Basic                      ▼ ]         │
│   experiment building:                                                      │
└─────────────────────────────────────────────────────────────────────────────┘

┌──────────────────────────────────────────────────────┐ ┌──────────┐
│                                                      │ │ Compute  │
└──────────────────────────────────────────────────────┘ └──────────┘

Please note: you can stop at any time and obtain a valid set of experiments. Waiting until the end of the computation provides better solutions.

[ < Back ]  [ Next > ]  [ Cancel ]  [ Help ]

Figure 8

Figure 9

(22)          (21)

Figure 10

| Variable ▲ | Controlled | |
|---|---|---|
| acceptation par la population locale | Yes | |
| Architecte industriel | Yes | ALP ; APL ; BG&E : CPC : CPL ; CYAPC : Coned ; [ |
| changements politiques nat. | Yes | |
| Chaudière | Yes | ACLF ; BW ; Balcke ; Balcke/GHH ; Bechtel ; Breda |
| climat froid | Yes | |
| combustible | Yes | UO2 |
| complexite circuit | Yes | |
| conception refroissement | Yes | clf/sgg ; dbl ; doubsgg ; icecond : lf ; lf/mp ; lf/s |
| croissance du personnel | Yes | |
| date de construction | Yes | |
| débit refroidissement | Yes | |

Figure 11

| Experiment Table | | | | | X |
|---|---|---|---|---|---|
| <Exp> ▲ | stabilité direction | changements politiques nat. | taille moyenne | combustible | nbre refroidiss |
| Exp 000001 | non | oui | 2,195 | 40 | 30 |
| Exp 000002 | non | oui | 2,09 | 30 | 30 |
| Exp 000003 | oui | oui | 3.9 | 40 | 30 |
| Exp 000004 | non | oui | 1,985 | 30 | 30 |
| Exp 000005 | oui | oui | 1,75 | 40 | 30 |
| Exp 000006 | oui | oui | 3,75 | 30 | 30 |
| Exp 000007 | oui | oui | 3,6 | 40 | 30 |
| Exp 000008 | non | oui | 3,47 | 40 | 30 |
| Exp 000009 | non | oui | 2,47 | 40 | 30 |
| Exp 000010 | non | oui | 3,275 | 40 | 30 |
| Exp 000011 | oui | oui | 3,05 | 30 | 30 |

## Figure 12

début

Nouvelles
données
expérimentales

Données
historiques

génération de
règles

existence d'une
règle satisfaisante — Oui → fin

non

existence d'une
règle prometteuse

Oui        Non

domaine de recherche :
règle prometteuse

domaine de recherche :
espace complet

Choix du nombre
«n» d'expériences

construction du plan
d'expériences

réalisation des
expériences

Utilisateur

action

choix

Logiciel

action

informations
nécessaires

# Figure 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6625500 B
- US 20020128805 A